# EUROPEAN PATENT SPECIFICATION

(11) **EP 2 816 254 B1**
(45) Date of publication and mention of the grant of the patent: **27.01.2021**
(21) Application number: 13749561.0
(22) Date of filing: 14.02.2013
(51) Int. Cl.: F16H 25/24, F16B 21/18, F16H 25/20, F16H 25/22, H02K 7/06

(54) **ELECTRIC LINEAR ACTUATOR**
ELEKTRISCHER LINEARANTRIEB
ACTIONNEUR LINÉAIRE ÉLECTRIQUE

(30) Priority: 17.02.2012 JP 2012032234
(43) Date of publication of application: 24.12.2014
(73) Proprietor: NTN Corporation, Osaka-shi, Osaka 550-0003 (JP)
(72) Inventor: IKEDA, Yoshinori, Shizuoka 4388510 (JP); FUNADA, Kensuke, Shizuoka 4988510 (JP)
(74) Representative: Cohausz & Florack
(86) International application number: PCT/JP2013/053554
(87) International publication number: WO 2013/122158

(56) References cited:
- WO-A1-2011/068125
- WO-A1-2011/135849
- WO-A1-2011/162369
- JP-A- H0 849 782
- JP-A- H08 324 982
- JP-A- H10 331 836
- JP-A- 2005 291 480
- JP-A- 2006 316 923
- JP-A- 2007 333 046
- JP-A- 2010 286 083
- JP-A- 2012 021 609
- US-A- 2 487 802
- US-A1- 2009 247 365

## Description

### Field of the Invention

The present invention relates to an electric linear actuator provided with a ball screw mechanism used in electric motors in general industries and driving sections of automobiles etc., and more particularly to an electric linear actuator used in a transmission or a parking brake for converting rotary motion from an electric motor to linear motion of a driving shaft via a ball screw mechanism. Such an electric linear actuator is known from the document WO2011135849A.

### Description of Background Art

It has been generally used gear mechanisms such as a trapezoidal threaded worm gear mechanism or a rack and pinion gear mechanism as a mechanism for converting a rotary motion of an electric motor to an axial linear motion in an electric linear actuator used in various kinds of driving sections. These motion converting mechanisms involve sliding contact portions and thus power loss is increased and accordingly increase of sizes of electric motors and power consumption are obliged. Accordingly, the ball screw mechanisms have been widely adopted as more efficient actuators.

In an electric linear actuator of the prior art, an output member connected to a nut can be axially displaced by rotationally driving a ball screw shaft forming a ball screw with use of an electric motor supported on a housing. In usual, since friction of the ball screw mechanism is very low, the ball screw shaft tends to be reversely rotated easily when a pushing thrust load is applied to the output member, and accordingly it is necessary to hold the position of the output member when the electric motor is stopped.

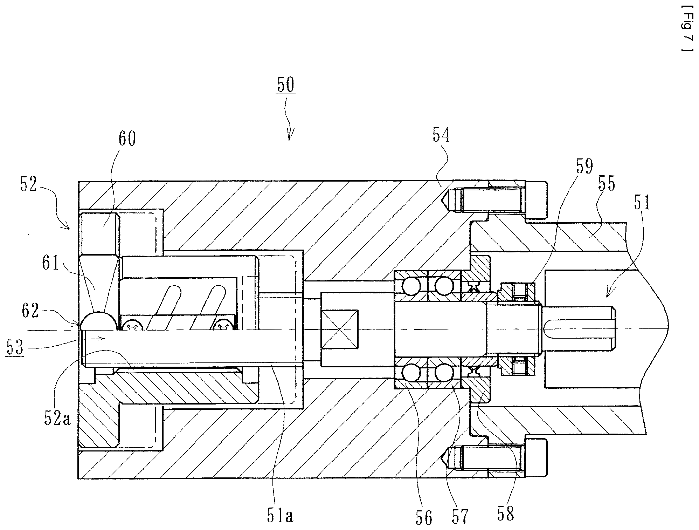

Accordingly, it has been developed an electric linear actuator in which a brake means is arranged for an electric motor or a low efficient means such as a worm gear is provided as a power transmitting means. In Fig. 7, one representative example of them is shown and it adopts a ball screw mechanism 53 comprising ball screw shaft 51 rotationally driven by an electric motor (not shown) and ball screw nut 52 engaged with the ball screw shaft 51 via balls (not shown). When a motor shaft (not shown) of the electric motor is rotated, the ball screw shaft 51 connected to the motor shaft is rotated and moves the ball screw nut 52 in linear motion (left and right direction in Fig. 7).

The ball screw shaft 51 is rotationally supported on cylindrical housings 54, 55 via two rolling bearings 56, 57. These rolling bearings 56, 57 are secured by a rotation preventing member 59 for preventing loose of the bearings 56, 57 via a securing lid 58.

The ball screw shaft 51 is formed on its outer circumference with helical screw groove 51a and engages with a cylindrical ball screw nut 52 via balls. The ball screw nut 52 is formed on its inner circumference with helical screw groove 52a and has a larger diameter portion 60 on its end.

A side surface of the larger diameter portion 60 is formed with a flat portion 61 cut out as having a flat end face and a cam follower (rotation preventing means) 62 is projected radially outward from a substantially central portion of the flat portion 61.

Since the cam follower 62 is fitted in the cut-out portion, the ball screw nut 52 is not be rotated along with the rotation of the ball screw shaft 51. In addition, since the cam follower 62 rotationally slides against the cut-out portion, it is possible to reduce problems of sliding friction and wear of the housing (see e.g. Patent Document 1 below).

### Document of the Prior Art

### Patent Document

Patent Document 1: JP 2007 -333046 A

### Disclosure of the Invention

### Problems to be solved by the Invention

In the electric linear actuator 50 of the prior art, the use of cam follower 62 as a rotation preventing means of the ball screw nut 52 makes it possible to reduce problems of sliding friction and wear of the housing of the actuator. However, since the cam follower 62 itself uses a rolling bearing, it is afraid that the manufacturing cost of the electric linear actuator would be increased. In addition, any anti-wear means will be required when the housing is made of aluminum material.

It is, therefore, an object of the present invention to provide an electric linear actuator which can reduce the sliding friction and wear of the housing of the electric linear actuator and also the manufacturing cost due to its simple structure.

### Means for solving the Problems

For achieving the object of the present invention, there is provided according to the present invention of claim 1, an electric linear actuator comprising a cylindrical housing formed of aluminum light alloy; an electric motor mounted on the housing; a speed reduction mechanism for reducing the rotational speed of the electric motor via a motor shaft; and a ball screw mechanism for converting the rotational motion of the electric motor to an axial linear motion of a driving shaft via the speed reduction mechanism; the ball screw mechanism comprising a nut formed with a helical screw groove on its inner circumference and supported by a pair of supporting bearings mounted on the housing rotationally but axially immovably, and a screw shaft integrated coaxially with the driving shaft, formed with helical screw groove on its outer circumference corresponding to helical screw groove of the nut, adapted to be inserted into the nut via a large number of balls, and supported on the housing not rotationally but axially movably; the housing being formed with receiving bores for receiving the screw shaft characterized in that a cylindrical sleeve is securely press-fitted into the receiving bore of the housing, the sleeve being formed on its inner circumference at diametrically opposed positions with one pair of axially extending recessed grooves with which a guide pin mounted on the end of the screw shaft being engaged, and that an annular groove is formed near an opening of the receiving bore of the housing and the sleeve is held in the receiving bore not to come out therefrom with being pressed by a stopper ring snapped in the annular groove.

As defined in claim 1, since the electric linear actuator of the present invention comprises a cylindrical housing formed of aluminum light alloy; an electric motor mounted on the housing; a speed reduction mechanism for reducing the rotational speed of the electric motor via a motor shaft; and a ball screw mechanism for converting the rotational motion of the electric motor to an axial linear motion of a driving shaft via the speed reduction mechanism; the ball screw mechanism comprising a nut formed with a helical screw groove on its inner circumference and supported by a pair of supporting bearings mounted on the housing rotationally but axially immovably, and a screw shaft integrated coaxially with the driving shaft, formed with helical screw groove on its outer circumference corresponding to helical screw groove of the nut, adapted to be inserted into the nut via a large number of balls, and supported on the housing not rotationally but axially movably; the housing being formed with receiving bores for receiving the screw shaft and is characterized in that a cylindrical sleeve is securely press-fitted into the receiving bore of the housing, the sleeve being formed on its inner circumference at diametrically opposed positions with one pair of axially extending recessed grooves with which a guide pin mounted on the end of the screw shaft being engaged, and that an annular groove is formed near an opening of the receiving bore of the housing and the sleeve is held in the receiving bore not to come out therefrom with being pressed by a stopper ring snapped in the annular groove, it is possible to provide an electric linear actuator which can reduce the sliding friction and wear of the housing of the electric linear actuator and also the manufacturing cost due to its simple structure.

It is preferable as defined in claim 2 that the stopper ring is formed with bent portions each having at least one vertex at positions symmetric around a cut-out portion of the stopper ring. This makes it possible to apply a predetermined pre-pressure to the sleeve by an axial load due to spring force of the stopper ring and thus to surely prevent generation of wear, sound or vibration of the housing.

It is preferable as defined in claim 3 that the width of the annular groove is set smaller than the free height of the stopper ring. This makes it possible to compress the stopper ring when it is mounted in the annular groove and to generate axial load to be applied to the sleeve.

It is preferable as defined in claim 4 that at least radially outermost corner edges of the stopper ring are rounded. This makes it possible for the stopper ring to scrape the inner circumference of the housing and thus to improve the reliability of the actuator with preventing generation of debris which would cause troubles of the actuator.

It is also preferable as defined claim 5 that the stopper ring is formed by press working of wire material of which corner edges are previously rounded. This makes it possible to omit post treatment of the stopper ring and thus to improve its productivity.

It is preferable as defined in claim 6 that the sleeve is formed of sintered alloy of which carburization quenching is possible. This makes it possible to easily form an accurate sleeve having desired configuration and dimension although it requires high manufacturing technology or has a complicated configuration.

It is also preferable as defined in claim 7 that the housing is formed by aluminum die casting. This makes it possible to have high productivity and low manufacturing cost.

It is also preferable as defined in claim 8 that the guide pin is formed of a needle roller used for needle roller bearings. This makes it possible to have guide pins excellent in the wear resistance and shearing strength and also availability and thus to reduce the manufacturing cost. In addition, since the ends of needle rollers are crowned, it is possible to prevent generation of edge load in contacting points with the recessed grooves of the sleeve and thus to reduce the contact-surface pressure and to improve the durability of the actuator for a long term.

### Effects of the Invention

According to the electric linear actuator of the present invention, since it comprises a cylindrical housing formed of aluminum light alloy; an electric motor mounted on the housing; a speed reduction mechanism for reducing the rotational speed of the electric motor via a motor shaft; and a ball screw mechanism for converting the rotational motion of the electric motor to an axial linear motion of a driving shaft via the speed reduction mechanism; the ball screw mechanism comprising a nut formed with a helical screw groove on its inner circumference and supported by a pair of supporting bearings mounted on the housing rotationally but axially immovably, and a screw shaft integrated coaxially with the driving shaft, formed with helical screw groove on its outer circumference corresponding to helical screw groove of the nut, adapted to be inserted into the nut via a large number of balls, and supported on the housing not rotationally but axially movably; the housing being formed with receiving bores for receiving the screw shaft and is characterized in that a cylindrical sleeve is securely press-fitted into the receiving bore of the housing, the sleeve being formed on its inner circumference at diametrically opposed positions with one pair of axially extending recessed grooves with which a guide pin mounted on the end of the screw shaft being engaged, and that an annular groove is formed near an opening of the receiving bore of the housing and the sleeve is held in the receiving bore not to come out therefrom with being pressed by a stopper ring snapped in the annular groove, it is possible to provide an electric linear actuator which can reduce the sliding friction and wear of the housing of the electric linear actuator and also the manufacturing cost due to its simple structure.

### Brief description of the Drawings

[Fig. 1] A longitudinal section view showing one preferable embodiment of an electric linear actuator of the present invention;
[Fig. 2] A longitudinal section view showing a ball screw mechanism of the electric linear actuator of Fig. 1;
[Fig. 3] A cross-section view taken along a line III-III of Fig. 1;
[Fig. 4] A partially enlarged view showing a mounting portion of a stopper ring;
[Fig. 5] Fig. 5(a): a side elevation view of a stopper ring of the present invention, and Fig. 5(b): a front elevation view of Fig. 5(a);
[Fig. 6] An explanatory view showing a mounting portion of a stopper ring of the prior art; and
[Fig. 7] A longitudinal section view showing one preferable embodiment of an electric linear actuator of the prior art.

### Mode for carrying out the Invention

One mode for carrying out the present invention is an electric linear actuator comprising a cylindrical housing formed of aluminum light alloy; an electric motor mounted on the housing; a speed reduction mechanism for reducing the rotational speed of the electric motor via a motor shaft; and a ball screw mechanism for converting the rotational motion of the electric motor to an axial linear motion of a driving shaft via the speed reduction mechanism; the ball screw mechanism comprising a nut formed with a helical screw groove on its inner circumference and supported by a pair of supporting bearings mounted on the housing rotationally but axially immovably, and a screw shaft integrated coaxially with the driving shaft, formed with helical screw groove on its outer circumference corresponding to helical screw groove of the nut, adapted to be inserted into the nut via a large number of balls, and supported on the housing not rotationally but axially movably; the housing being formed with receiving bores for receiving the screw shaft characterized in that a cylindrical sleeve is securely press-fitted into the receiving bore of the housing, the sleeve being formed on its inner circumference at diametrically opposed positions with one pair of axially extending recessed grooves with which a guide pin mounted on the end of the screw shaft being engaged, and that an annular groove is formed near an opening of the receiving bore of the housing and the sleeve is held in the receiving bore not to come out therefrom with being pressed by a stopper ring snapped in the annular groove and formed with bent portion having at least one vertex at positions symmetric around a cut-out portion of the stopper ring.

### Embodiment

One preferable embodiment of the present invention will be hereinafter described with reference to the drawings.

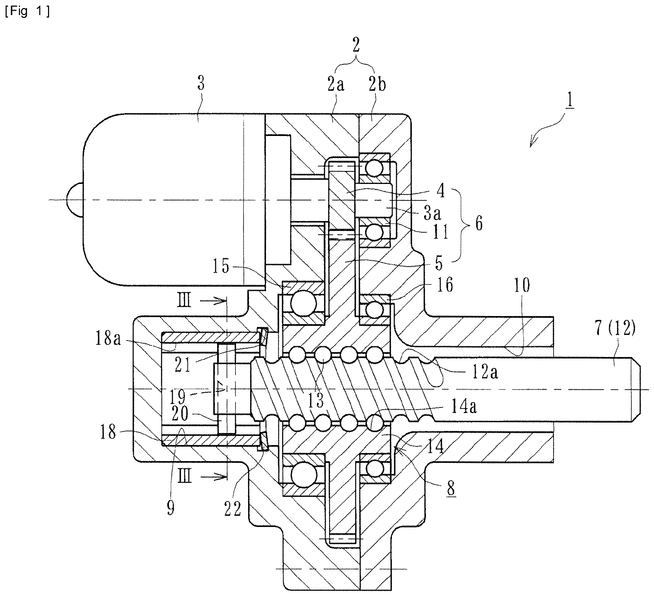

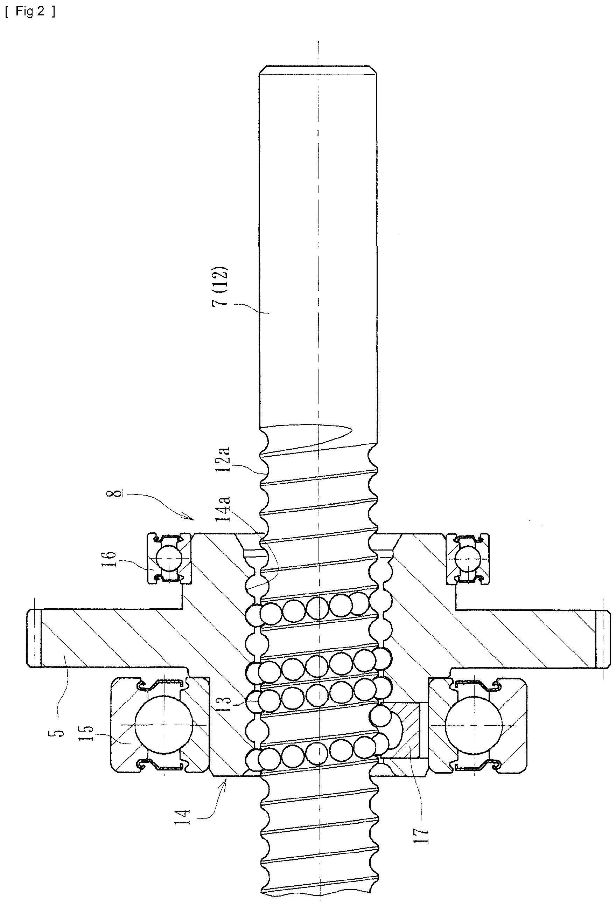

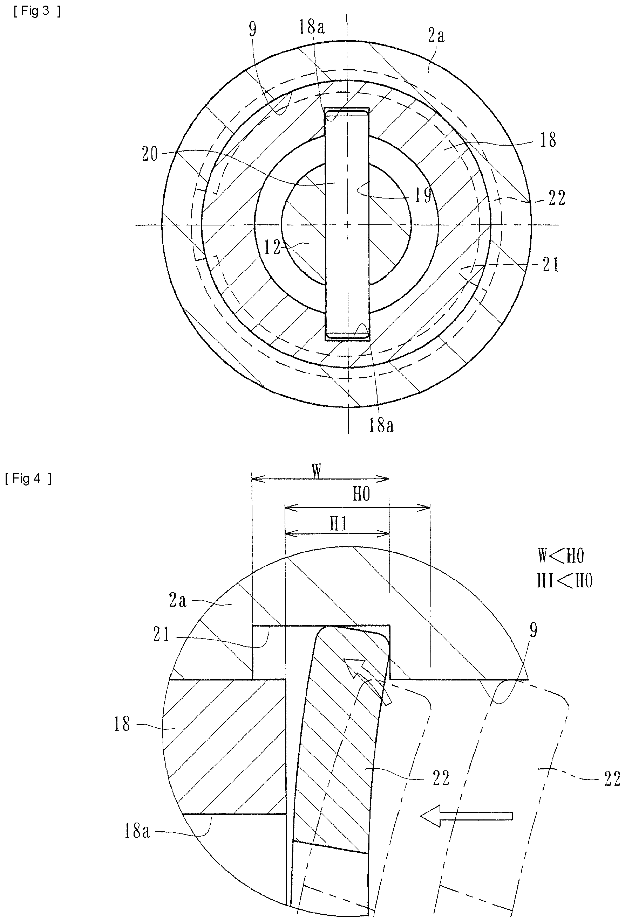

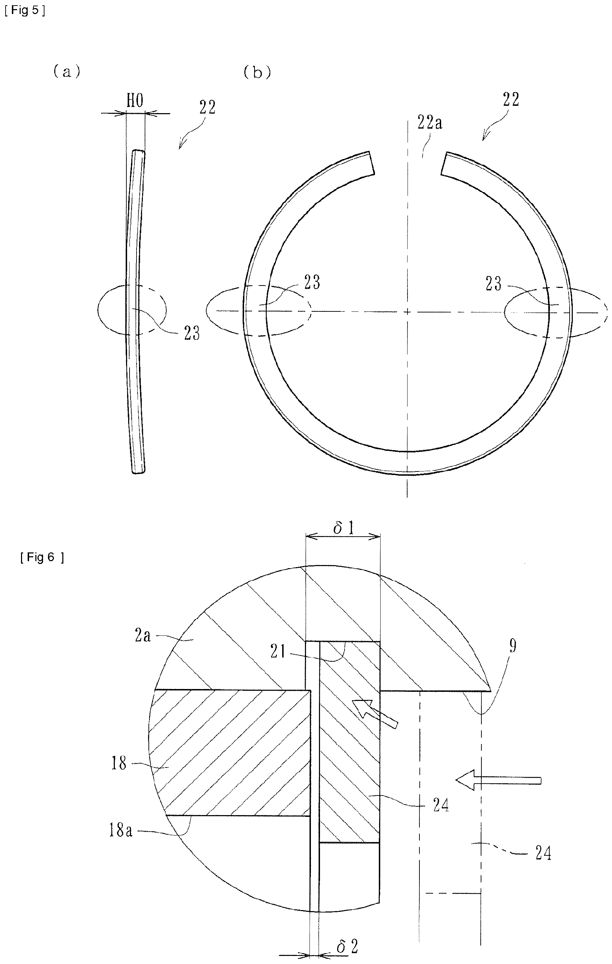

Fig. 1 is a longitudinal section view showing one preferable embodiment of an electric linear actuator of the present invention; Fig. 2 is a longitudinal section view showing a ball screw mechanism of the electric linear actuator of Fig. 1; Fig. 3 is a cross-section view taken along a line III-III of Fig. 1; Fig.4 is a partially enlarged view showing a mounting portion of a stopper ring; Fig. 5(a) is a side elevation view of a stopper ring of the present invention and Fig. 5(b) is a front elevation view of Fig. 5(a); and Fig. 6 is an explanatory view showing a mounting portion of a stopper ring of the prior art.

As shown in Fig. 1, an electric linear actuator 1 of the present invention comprises a cylindrical housing 2, an electric motor 3 mounted on the housing 2, a speed reduction mechanism 6 comprising a pair of spur gears 4, 5 for reducing the rotational speed of the electric motor 3 via its motor shaft 3a, and a ball screw mechanism 8 for converting the rotational motion of the electric motor 3 to an axial linear motion of a driving shaft 7 via the speed reduction mechanism 6.

The housing 2 is formed of aluminum alloy such as A6063TE, ADC12 etc. and comprises a first housing 2a and second housing 2b abutted against the end face of the first housing 2a which are integrally secured each other by fastening bolts (not shown). The electric motor 3 is mounted on the first housing 2a and the first and second housings 2a, 2b are formed respectively with a receiving bore (blind bore) 9 and a receiving bore (through bore) 10 for receiving a screw shaft 12.

The motor shaft 3a of the electric motor 3 is securely press-fitted by the smaller spur gear 4 in an unrotatable manner and rotationally supported by a rolling bearing 11 mounted on the second housing 2b. The larger spur gear 5 is integrally formed with a nut 14 forming the ball screw mechanism later mentioned more in detail and engaged with the smaller spur gear 4. The driving shaft 7 is coaxially and integrally formed with the screw shaft 12 forming the ball screw mechanism 8.

As shown in the enlarged view of Fig. 2, the ball screw mechanism 8 comprises the screw shaft 12 and the nut 14 externally mounted on the screw shaft 12 via balls 13. The screw shaft 12 is formed with a helical screw groove 12a on its outer circumference and supported not rotationally but axially movably. On the other hand, the nut 14 is formed on its inner circumference with a helical screw groove 14a corresponding to the helical screw groove 12a of the screw shaft 12. A number of the balls 13 are freely rollably contained between the screw grooves 12a, 14a. The nut 14 is supported by a pair of supporting bearings 15, 16 mounted on the housing 2 rotationally but axially immovably. A reference numeral 17 denotes a bridge member for connecting the screw grooves 14a of the nut 14 and endlessly circulating the balls 13 therethrough.

The cross-sectional configuration of each screw groove 12a, 14a may be either of circular-arc or Gothic-arc configuration. However, this embodiment adopts the Gothic-arc configuration since it can have a large contacting angle with the ball 13 and a small axial gap. This enables to have large rigidity against the axial load and to suppress generation of vibration.

The nut 14 is formed of case hardened steel such as SCM415 or SCM420 and its surface is hardened to HRC 55∼62 by vacuum carburizing hardening. This enables to omit treatments such as buffing for scale removal after heat treatment and thus to reduce the manufacturing cost. On the other hand, the screw shaft 12 is formed of medium carbon steel such as S55C or case hardened steel such as SCM415 or SCM420 and its surface is hardened to HRC 55∼62 by induction hardening or carburizing hardening.

The larger spur gear 5 is integrally formed on the outer circumference of the nut 14 and two supporting bearings 15, 16 are press-fitted onto the larger spur gear 5 via a predetermined interface. This makes it possible to prevent generation of axial positional displacement between the supporting bearings 15, 16 and the larger spur gear 5 although a thrust load would be applied to them from the driving shaft 7. In addition, each of the supporting bearings 15, 16 is formed of the deep groove ball bearing of sealed type in which shield plates are arranged on either side of the support bearings to prevent leakage of lubricating grease sealed in the bearings and penetration of worn powder or debris into the bearings from outside.

According to the present invention, the cylindrical sleeve 18 is fitted into the receiving bore (blind bore) 9 of the first housing 2a. The sleeve 18 is formed of sintered alloy by an injection molding machine for molding plastically prepared metallic powder. In this injection molding, metallic powder and binder comprising plastics and wax are firstly mixed and kneaded by a mixing and kneading machine to form pellets from the mixed and kneaded material. The pellets are formed to articles (sleeves) by a so-called MIM (Metal Injection Molding) method in which pellets are fed to a hopper of the injection molding machine and then to molds under a heated and melted condition. The MIM method can easily mold sintered alloy material to articles having desirable accurate configurations and dimensions although the articles require high manufacturing technology and have configurations hard to form.

It can be shown one example of the metallic powder such as SCM415 which can be carburization quenched later and consists of compositions of C: 0.13% by weight, Ni: 0.21% by weight, Cr: 1.1% by weight, Cu: 0.04% by weight, Mn: 0.76% by weight, Mo: 0.19% by weight, Si: 0.20% by weight, and remainder: Fe. The sleeve 18 is formed by controlling temperatures of carburization quenching and tempering. There can be used other materials for the sleeve 18 e.g. FEN8 of Japanese powder metallurgy industry standard which is excellent in formability and rust resistance and includes Ni: 3.0∼10.0% by weight or precipitation hardening stainless steel SUS630 consisting of C: 0.07% by weight, Cr: 17 % by weight, Ni: 4% by weight, Cu: 4 % by weight, and remainder: Fe. The surface hardness of SUS630 can be increased within a range of 20∼33 HRC by solution treatment to obtain both high toughness and hardness. With the use of such sintering material for forming the sleeve 18, it is possible to increase the strength and wear resistance of the sleeve higher than those of the first housing 2a formed of aluminum alloy and thus to improve the durability of the electric linear actuator.

As shown in Fig. 3, the sleeve 18 is formed with one pair of axially extending recessed grooves 18a on the inner circumference of the sleeve 18 at its diametrically opposed positions.

On the other hand, the end of the screw shaft 12 is formed with radially extending through aperture 19 through which a guide pin 20 is fitted. Formed near an opening of the receiving bore 9 is an annular groove 21 into which a stopper ring 22 is snapped to secure the axial position of the sleeve 18 (see Fig. 1).

The guide pin 20 fitted in the through aperture 19 can be engaged with the recessed groove 18a of the sleeve 18 and axially guide the screw shaft 12 and stop rotation thereof. The guide pin 20 and the sleeve 18 cooperate and constitute a rotation stopping mechanism for the screw shaft 12.

A needle roller for needle roller bearings is used for the guide pin 20 since the needle rollers are excellent in the wear resistance and shearing strength and also availability and thus able to reduce the manufacturing cost. In addition, since the ends of needle rollers are crowned, it is possible to prevent generation of edge load in contacting points with the recessed grooves 18a of the sleeve 18 and thus to reduce the contact-surface pressure and to improve the durability of the actuator for a long term.

According to this structure of the present invention, since functions of axial guide and rotation prevention of the screw shaft 12 are performed by engagement of the guide pin 20 with the recessed groove 18a of the sleeve 18, it is possible to provide an electric linear actuator which can reduce the sliding friction and wear of the housing 2a formed of aluminum light alloy as well as manufacturing cost due to its simple structure.

As shown in an enlarged view of Fig. 4, further according to the present invention, a stopper ring 22 is snapped into an annular groove 21 formed on the inner circumference of the receiving bore 9 to prevent the sleeve 18 from being axially moved due to interfere of the stopper ring 22 with the sleeve 18. The stopper ring 22 is preferably formed of hard steel wire material such as SWRH67A (JIS G3506). As shown in Fig. 5, the stopper ring 22 is different from a conventional flat "C"-shaped snap ring and formed with bent portions 23 having at least one vertex at positions symmetric around a cut-out portion 22a of the stopper ring 22.

The stopper ring 22 may be press-formed for example of austenitic stainless steel sheet (e.g. JIS SUS304 etc.) or preserved cold rolled steel sheet (e.g. JIS SPCC etc.) other than the previously described material.

As comparatively shown in Fig. 6, it is afraid in a stopper ring 24 of the prior art that there would be caused an axial gapδ1 between annular groove 21 and the stopper ring 24 or an axial gapδ2 between the stopper ring 24 and the sleeve 18 and accordingly there would be also caused wear of receiving bore 9 and noise or vibration of the sleeve 18 or stopper ring 24. Further in the stopper ring 24 of the prior art, it is afraid that the stopper ring 24 would scrape the inner circumference of the receiving bore 9 during insertion of the stopper ring to the receiving bore 9 under a radially compressed condition and the scraped debris would cause various troubles of the electric linear actuator.

On the contrary according to the present invention, at least radially outermost corner edges of the stopper ring 22 are rounded as shown in Fig. 4. In this case, when the stopper ring 22 is formed by press working of wire material of which corner edges are previously rounded, it is possible to omit post treatment of the stopper ring and thus to improve its productivity. In addition, since the width W of the annular groove 21 is set smaller than the free height H0 (see Fig. 5(a)) of the stopper ring 22, the stopper ring 22 can be axially compressed as compared to the non-compressed condition (i.e. free height H0) when it is snapped into the annular groove 21 and occupies a mounted condition (mounted height H1). This makes it possible to apply a predetermined pre-pressure on the sleeve 18 and thus to surely prevent wear of the housing 2a and generation of sound or vibration of the actuator.

### [Applicability in Industries]

The electric linear actuator of the present invention can be applied to electric linear actuators used in an electric motor for general industries and driving sections of an automobile etc. and having ball screw mechanism for converting the rotational input from an electric motor to the linear motion of a driving shaft.

### Explanation of Reference numerals

- 1: electric linear actuator
- 2: housing
- 2a: first housing
- 2b: second housing
- 3: electric motor
- 3a: motor shaft
- 4: smaller spur gear
- 5: larger spur gear
- 6: speed reduction mechanism
- 7: driving shaft
- 8: ball screw mechanism
- 9: receiving bore (blind bore)
- 10: receiving bore (through bore)
- 11: rolling bearing
- 12: screw shaft
- 12a, 14a: screw groove
- 13: ball
- 14: nut
- 15, 16: supporting bearing
- 17: bridge member
- 18: sleeve
- 18a: recessed groove
- 19: through aperture
- 20: guide pin
- 21: annular groove
- 22,24: stopper ring
- 22a: cut-out portion
- 23: bent portion
- 50: electric linear actuator
- 51: ball screw shaft
- 51a, 52a: screw groove
- 52: ball screw nut
- 53: ball screw
- 54, 55: housing
- 56, 57: rolling bearing
- 58: securing lid
- 59: rotation preventing member for preventing loose of bearings ball
- 60: larger diameter portion of nut
- 61: flat portion
- H0: free height of stopper ring
- H1: mounted height of stopper ring
- W: groove width of annular groove
- δ1: gap between stopper ring and annular groove
- δ2: gap between stopper ring and sleeve

## Claims

1. An electric linear actuator comprising:
a cylindrical housing (2) formed of aluminum light alloy;
an electric motor (3) mounted on the housing (2);
a speed reduction mechanism (6) for reducing the rotational speed of the electric motor (3) via a motor shaft (3a); and
a ball screw mechanism (8) for converting the rotational motion of the electric motor (3) to an axial linear motion of a driving shaft (7) via the speed reduction mechanism (6);
the ball screw mechanism (8) comprising:
a nut (14) formed with a helical screw groove (14a) on its inner circumference and supported by a pair of supporting bearings (15, 16) mounted on the housing (2) rotationally but axially immovably, and
a screw shaft (12) integrated coaxially with the driving shaft (7), formed with helical screw groove (12a) on its outer circumference corresponding to helical screw groove (14a) of the nut (14), adapted to be inserted into the nut (14) via a large number of balls (13), and supported on the housing (2) not rotationally but axially movably;
the housing (2) being formed with receiving bores (9, 10) for receiving the screw shaft (12) **characterized in**:
**that** a cylindrical sleeve (18) is securely press-fitted into the receiving bore (9) of the housing (2), the sleeve (18) being formed on its inner circumference at diametrically opposed positions with one pair of axially extending recessed grooves (18a) with which a guide pin (20) mounted on the end of the screw shaft (12) being engaged, and
**that** an annular groove (21) is formed near an opening of the receiving bore (9) of the housing (2) and the sleeve (18) is held in the receiving bore (9) not to come out therefrom with being pressed by a stopper ring (22) snapped in the annular groove (21).

2. An electric linear actuator of claim 1 wherein the stopper ring (22) is formed with bent portions (23) each having at least one vertex at positions symmetric around a cut-out portion (22a) of the stopper ring (22).

3. An electric linear actuator of claim 1 or 2 wherein the width (W) of the annular groove (21) is set smaller than the free height (H0) of the stopper ring (22).

4. An electric linear actuator of any one of claims 1∼3 wherein at least radially outermost corner edges of the stopper ring (22) are rounded.

5. An electric linear actuator of any one of claims 1∼4 wherein the stopper ring (22) is formed by press working of wire material of which corner edges are previously rounded.

6. An electric linear actuator of claim 1 wherein the sleeve (18) is formed of sintered alloy of which carburization quenching is possible.

7. An electric linear actuator of claim 1 wherein the housing (2) is formed by aluminum die casting.

8. An electric linear actuator of claim 1 wherein the guide pin (20) is formed of a needle roller used for needle roller bearings.

## Patentansprüche

1. Elektrischer Linearantrieb, umfassend:
ein zylindrisches Gehäuse (2), gebildet aus Aluminium-Leichtmetall-Legierung;
einen Elektromotor (3), montiert auf dem Gehäuse (2);
einen Drehzahlreduzierungsmechanismus (6) zum Reduzieren der Drehgeschwindigkeit des Elektromotors (3) über eine Motorwelle (3a); und
einen Kugelgewindemechanismus (8) zum Umwandeln der Drehbewegung des Elektromotors (3) in eine lineare Axialbewegung einer Antriebswelle (7) über den Drehzahlreduzierungsmechanismus (6);
wobei der Kugelgewindemechanismus (8) umfasst:
eine Mutter (14), ausgebildet mit einer spiralförmigen Schraubennut (14a) auf ihrem Innenumfang und gestützt durch ein Paar Stützlager (15, 16), drehbar jedoch axial unbeweglich an dem Gehäuse (2) montiert, und
eine Schraubenwelle (12), koaxial integriert mit der Antriebswelle (7), ausgebildet mit einer spiralförmigen Schraubennut (12a) auf ihrem Außenumfang entsprechend einer spiralförmigen Schraubennut (14a) der Mutter (14), so angepasst, dass sie über eine große Anzahl von Kugeln (13) in die Mutter (14) eingesetzt und an dem Gehäuse (2) nicht drehbar, jedoch axial beweglich gestützt wird;
wobei das Gehäuse (2) mit Aufnahmebohrungen (9, 10) zum Aufnehmen der Schraubenwelle (12) ausgebildet ist, ***dadurch gekennzeichnet, dass**:*
eine zylindrische Hülse (18) sicher in die Aufnahmebohrung (9) des Gehäuses (2) eingepresst wird, wobei die Hülse (18) auf ihrem Innenumfang an diametral entgegengesetzten Positionen mit einem Paar sich axial erstreckender eingelassener Nuten (18a) ausgebildet wird, in die ein Führungsstift (20) eingreifend ist, der an dem Ende der Schraubenwelle (12) montiert ist; *und dass* eine ringförmige Nut (21) nahe einer Öffnung der Aufnahmebohrung (9) des Gehäuses (2) ausgebildet ist, und die Hülse (18) in der Aufnahmebohrung (9) gehalten wird, so dass sie sich nicht mehr daraus lösen kann, indem sie durch einen Feststellring (22) gedrückt wird, der in die ringförmige Nut (21) eingerastet ist.

2. Elektrischer Linearantrieb nach Anspruch 1, wobei der Feststellring (22) mit gebogenen Abschnitten (23) ausgebildet ist, von denen jeder mindestens einen Scheitelpunkt an Positionen symmetrisch rund um einen ausgeschnittenen Abschnitt (22a) des Feststellrings (22) aufweist.

3. Elektrischer Linearantrieb nach Anspruch 1 oder 2, wobei die Weite (W) der ringförmigen Nut (21) kleiner als die freie Höhe (H0) des Feststellrings (22) eingestellt ist.

4. Elektrischer Linearantrieb nach einem der Ansprüche 1 bis 3, wobei mindestens die radial äußersten Eckkanten des Feststellrings (22) abgerundet sind.

5. Elektrischer Linearantrieb nach einem der Ansprüche 1 bis 4, wobei der Feststellring (22) durch Pressbearbeitung von Drahtmaterial ausgebildet ist, von dem Eckkanten zuvor abgerundet wurden.

6. Elektrischer Linearantrieb nach Anspruch 1, wobei die Hülse (18) aus Sinterlegierung ausgebildet ist, für die Karbonisierungsabschreckung möglich ist.

7. Elektrischer Linearantrieb nach Anspruch 1, wobei das Gehäuse (2) durch Aluminium-Druckgießen ausgebildet ist.

8. Elektrischer Linearantrieb nach Anspruch 1, wobei der Führungsstift (20) aus einer Nadelwalze ausgebildet ist, die für Nadellager verwendet wird.

## Revendications

1. Actionneur linéaire électrique comprenant :
un boîtier cylindrique (2) en alliage léger d'aluminium ;
un moteur électrique (3) monté sur le boîtier (2) ;
un mécanisme réducteur de vitesse (6) destiné à réduire la vitesse de rotation du moteur électrique (3) par le biais d'un arbre moteur (3a) ; et
un mécanisme de vis à billes (8) destiné à convertir le mouvement de rotation du moteur électrique (3) en un mouvement linéaire axial d'un arbre d'entraînement (7) par le biais du mécanisme réducteur de vitesse (6) ;
le mécanisme de vis à billes (8) comprenant :
un écrou (14) doté d'une rainure de vis hélicoïdale (14a) sur sa circonférence interne et supporté par une paire de paliers de support (15, 16) montés sur le boîtier (2) de manière à pouvoir tourner, mais de manière fixe dans le sens axial, et
un arbre à vis (12) intégré de manière coaxiale à l'arbre d'entraînement (7), doté d'une rainure de vis hélicoïdale (12a) sur sa circonférence externe correspondant à la rainure de vis hélicoïdale (14a) de l'écrou (14), conçu pour être inséré dans l'écrou (14) par le biais d'un grand nombre de billes (13), et supporté sur le boîtier (2) de manière non rotative, mais de manière mobile dans le sens axial ;
le boîtier (2) étant doté d'alésages de réception (9, 10) destinés à recevoir l'arbre à vis (12), **caractérisés en ce que** :
un manchon cylindrique (18) est ajusté par pression de manière fixe dans l'alésage de réception (9) du boîtier (2), le manchon (18) étant doté, sur sa circonférence interne, dans des positions diamétralement opposées, d'une paire de rainures évidées s'étendant dans le sens axial (18a) avec lesquelles une tige de guidage (20) montée sur l'extrémité de l'arbre à vis (12) vient en prise, et
une rainure annulaire (21) est formée près d'une ouverture de l'alésage de réception (9) du boîtier (2) et le manchon (18) est maintenu dans l'alésage de réception (9) pour ne pas en sortir en étant comprimé par une bague d'arrêt (22) enclenchée dans la rainure annulaire (21).

2. Actionneur linéaire électrique selon la revendication 1, dans lequel la bague d'arrêt (22) est dotée de portions courbées (23) ayant chacune au moins un sommet dans des positions symétriques autour d'une portion découpée (22a) de la bague d'arrêt (22).

3. Actionneur linéaire électrique selon la revendication 1 ou 2, dans lequel la largeur (W) de la rainure annulaire (21) est définie pour être plus petite que la hauteur libre (H0) de la bague d'arrêt (22).

4. Actionneur linéaire électrique selon l'une quelconque des revendications 1 à 3, dans lequel les arêtes d'angle les plus éloignées au moins dans le sens radial de la bague d'arrêt (22) sont arrondies.

5. Actionneur linéaire électrique selon l'une quelconque des revendications 1 à 4, dans lequel la bague d'arrêt (22) est formée en travaillant à la presse un matériau de fil avec lequel les arêtes d'angle ont été préalablement arrondies.

6. Actionneur linéaire électrique selon la revendication 1, dans lequel le manchon (18) est en alliage fritté pouvant être soumis à une trempe de carburation.

7. Actionneur linéaire électrique selon la revendication 1, dans lequel le boîtier (2) est formé par moulage d'aluminium sous pression.

8. Actionneur linéaire électrique selon la revendication 1, dans lequel la tige de guidage (20) est constituée d'une aiguille utilisée pour les roulements à aiguilles.
